# EUROPÄISCHE PATENTSCHRIFT

(11) **EP 0 783 026 B1**
(45) Veröffentlichungstag und Bekanntmachung des Hinweises auf die Patenterteilung: **15.09.1999**
(21) Anmeldenummer: 96120748.7
(22) Anmeldetag: 23.12.1996
(51) Int. Cl.: C08L 67/06, C08F 299/04, C08G 63/553

(54) **Monomerfreie Formmassen auf Basis ungesättigter Polyesterharze**
Monomer-free moulding compositions based on unsaturated polyester resins
Compositions de moulage à base de résines polyesters insaturées exemptes de monomères

(30) Priorität: 04.01.1996 DE 19600153
(43) Veröffentlichungstag der Anmeldung: 09.07.1997
(73) Patentinhaber: DSM RESINS B.V., 8022 AW Zwolle (NL)
(72) Erfinder: Gerth, Dale, Dr., 67346 Speyer (DE); Blum, Rainer, 67069 Ludwigshafen (DE); Ittemann, Peter, Dr., 68623 Lampertheim (DE); Ziegert, Fritz, 67245 Lambsheim (DE)
(74) Vertreter: den Hartog, Jeroen Hendrikus Joseph

(56) Entgegenhaltungen:
- EP-A- 0 525 509
- DE-A- 2 851 454
- US-A- 3 986 992
- US-A- 4 522 978
- US-A- 4 626 570
- H.F. MARK ET AL. (ED.): "ENCYCLOPEDIA OF POLYMER SCIENCE AND ENGINEERING VOL. 12" 1988 , WILEY & SONS , N.Y. XP002033026 * Seite 286 - Seite 288 *
- CHEMICAL ABSTRACTS, vol. 85, no. 10, 6.September 1976 Columbus, Ohio, US; abstract no. 63905z, XP002033027 & PLAST. MASSY, Nr. 5, 1976, Seiten 42-43, G.I. KIREEV ET AL.:

## Beschreibung

Die Erfindung betrifft weitgehend monomerfreie, flächige bzw. teigige Formmassen (SMC-bzw. BMC-Massen) auf Basis von glasfaserverstärkten, füllstoffhaltigen ungesättigten Polyestern.

SMC- und BMC-Massen sind flächige bzw. teigige Halbzeugmassen, die ungesättigte Polyesterharze, Glasfasern, Füllstoffe und Radikalinitiatoren enthalten. Sie werden durch Verpressen bzw. Spritzgießen zu Formteilen umgeformt und gehärtet. Gewöhnlich enthalten ungesättigte Polyesterharze Monomere als reaktive Verdünner und Quervernetzungsmittel, meist Styrol. Letzteres kann bei der Verarbeitung der Harze zu Geruchsbelästigung führen, behördliche Auflagen machen daher aufwendige Absauganlagen notwendig. Andere Monomere sind toxikologisch nicht unbedenklich oder härten nicht vollständig aus. Wird der Gehalt der Formmassen an Monomeren zu weit reduziert, dann steigt die Viskosität zu stark an und die Massen können nicht mehr ohne weiters verarbeitet werden.

Der Erfindung lag daher die Aufgabe zugrunde, eine weitgehend monomerfreie SMC-bzw. BMC-Massen bereitzustellen, die gut nach den üblichen Methoden zu verarbeiten sind.

Es wurde gefunden, daß diese Aufgabe gelöst wird, wenn man als Polyester solche mit Endgruppen auf Basis von Dicyclopentadien verwendet.

Gegenstand der Erfindung sind demzufolge flächige bzw. teigige Formmassen aus glasfaserverstärkten, füllstoffhaltigen ungesättigten Polyesterharzen (SMC-bzw. BMC-Massen), enthaltend
A. 100 Gew.teile eines ungesättigten Polyesters mit einer Viskosität n von 100 bis 800 [mPa·s] (bei 125°C),
B. 0 bis 50 Gew.teile eines thermoplastischen Polymeren,
C. 0 bis 10 Gew.teile eines Eindickmittels,
D. 50 bis 250 Gew.teile Füllstoffe,
E. 40 bis 200 Gew.teile Glasfasern,
F. 0,2 bis 4 Gew.teile eines Radikalinitiators,
wobei der Polyester A pro Molekül 0,1 bis 5,0 Endgruppen der allgemeinen Formel 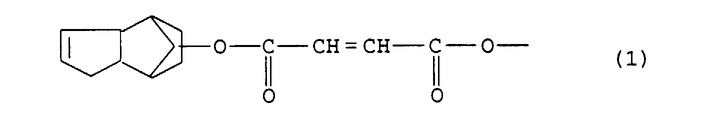 oder 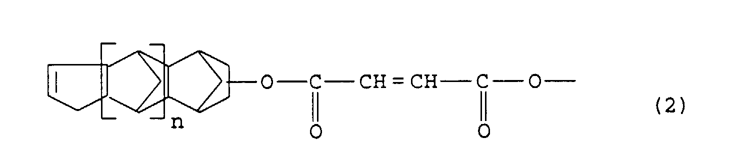 aufweist und weniger als 9 Gew.% copolymerisierbare Monomere zugemischt enthält.

Die DE-A 2 70 88 46 betrifft ungesättigte Polyesterharzmassen auf der Basis von 40 bis 90 Gew.% Dicyclopentadien-Endgruppen enthaltenden Polyester-Präpolymeren und 60 bis 10 Gew.-% ungesättigten Monomeren. Die Massen können gegebenenfalls Füllstoffe und Verstärkungsfasern enthalten, sie können als Gießharze für Elektroisolatoren sowie als Laminier- oder Wickelharze zur Herstellung von Behältern, Tanks, Booten oder strukturierten Flachmaterialien verwendet werden. Von einer Anwendung als SMC -oder BMC-Halbzeug ist nicht die Rede; es wird ausdrücklich darauf hingewiesen, daß Polyesterharzmassen, die mehr als 90 Gew.% Präpolymer, d.h., weniger als 10 Gew.-% Monomer enthalten, zu hochviskos sind bzw. nicht vollständig aushärten.

Die EP-A 501 176 betrifft eingedickte SMC- bzw. BMC-Massen, die ein ungesättigtes Polyesterharz sowie ein Säuregruppen enthaltendes thermoplastisches Vinylpolymeres enthalten. Das Polyesterharz kann Cyclopentenendgruppen aufweisen, es enthält aber jedenfalls 20 bis 60 Gew.-% üblicher copolymerisierbarer Monomerer.

Dicyclopentadien (DCPD) ist ein preisgünstiger petrochemischer Rohstoff, der bei der Dampfphasenspaltung von Rohbenzin zur Herstellung von Ethylen im C₅-Schnitt anfällt bzw. aus dem darin enthaltenden Cyclopentadien durch Diels-Alder-Dimerisation einfach hergestellt werden kann. Es ist bekannt, daß DCPD zur Modifizierung von ungesättigten Polyestern verwendet werden kann. Dabei sind Carboxyl-Gruppen des Polyesters an die reaktionsfähige Doppelbindung des DCPD addiert, welches auf diese Weise einen Endgruppenverschluß bildet. Derart modifizierte ungesättigte Polyester zeichnen sich durch erhöhte Temperaturbeständigkeit aus. Sie sind beispielsweise beschrieben in Fette, Seifen, Anstrichmittel 66 (1964), Seiten 670 - 687 und in Kunststoffe 66 (1976), Seiten 436 - 439.

Ein bevorzugtes Verfahren zur Herstellung der ungesättigten Polyester A besteht darin, daß DCPD mit α,β -ungesättigten Dicarbonsäuren oder deren Anhydriden zu Halbestern umgesetzt und diese dann zusammen mit Dicarbonsäuren bzw. deren Anhydriden und Diolen polykondensiert werden. Vorzugsweise setzt man Maleinsäureanhydrid mit einer aliquoten Menge Wasser und dem DCPD um, wobei sich der Maleinsäurehalbester bildet, z.B.

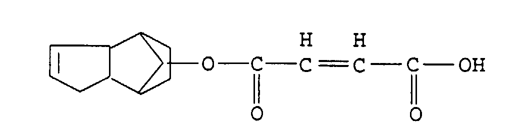

Diese Halbester nehmen an der üblichen Polykondensation zur Herstellung ungesättigter Polyester teil, wobei sie die Endgruppen bilden.

Entsprechend lassen sich auch die ungesättigten Polyester mit den Endgruppen der Formel (2) herstellen, wobei man von Oligomeren des Cyclopentadien ausgeht. Die Herstellung dieser Oligomeren, ihre Umsetzung mit Maleinsäureanhydrid zum Halbester, sowie die Polyesterherstellung ist in DE-A 3 10 74 50 ausführlich beschrieben.

Weitere Komponenten zur Herstellung der ungesättigten Polyester sind Dicarbonsäuren bzw. deren Anhydride oder Ester niedermolekularer Alkohole, wie z.B. o-Phthalsäure, Isophthalsäure, Terephthalsäuredimethylester, Adipinsäure; als Polyole Ethylenglykol, Propylenglykol-1,2, Butandiol-1,3, Butandiol-1,4, Neopentylglykol, Diethylenglykol, Triethylenglykol, Pentaerythrit, Dipropylenglykol sowie Trimethylolpropan, welches gegebenenfalls oxalkyliert sein kann. Die Veresterung geschieht in üblicher Weise durch gemeinsames Erhitzen der Dicarbonsäuren bzw. der Anhydride und der Diole in Gegenwart eines inerten Lösemittels oder eines Inertgases zur Entfernung des bei der Veresterung oder Umesterung entstehenden Wassers oder niedermolekularen Alkohols. Im letzteren Fall ist die Verwendung eines Umesterungskatalysators wie z.B. Alkalisalz, Zinksalz, Bleisalz u.a. erforderlich.

Grundsätzlich kann man auch erst einen Polyester mit Hydroxylendgruppen herstellen und diesen dann in einem separaten Reaktionsschritt mit dem oben beschriebenen DCPD-Halbester umsetzen. Diese Arbeitsweise ist in DE-A 27 08 846 beschrieben.

In beiden Fällen sollte der Polyester pro Molekül 0,1 bis 5,0 vorzugsweise 1,0 bis 2,0 Endgruppen der Formel (1) oder (2) aufweisen. Mehr als 2,0 DCPD-Endgruppen pro Molekül können dann erhalten werden, wenn man drei- oder höherfunktionelle Alkohole bei der Polyesterherstellung einsetzt.

Die Polyester A mit den Endgruppen (1) oder (2) enthalten weniger als 9 Gew.-%, vorzugsweise weniger als 3 Gew.-% und am besten überhaupt keine copolymerisierbaren Monomeren zugemischt.

Die ausreichende Verarbeitbarkeit der Polyester ist dann gegeben, wenn ihr mittleres Molekulargewicht einer Viskosität bei 125°C zwischen 50 und 800, insbesondere zwischen 100 und 600 [mPa·s] entspricht. Das Molekulargewicht kann durch den Kondensationsgrad des Polyesters und durch den Gehalt an DCPD-Endgruppen gezielt eingestellt werden. Die Viskosität wird gemessen mit einem Kegel-Platte-Viskosimeter nach DIN 53018.

Werden zur Erzielung besonderer Effekte doch Monomere zugesetzt, so sind dafür hochsiedende Vinyl -oder Acryl-Verbindungen geeignet, wie z.B. tert. Butylstyrol, Vinyltoluol, Hydroxyethylmethacrylat, 1,4-Butandioldimethacrylat oder Trimethylolpropandimethacrylat. Auch geringe Mengen Styrol können gegebenenfalls toleriert werden.

Die erfindungsgemäßen Formmassen enthalten auf 100 Gew.teile A 0 bis 50, vorzugsweise 5 bis 40 Gew.teile eines thermoplastischen Polymeren B als schrumpfmindernde Komponente, beispielsweise ein gegebenenfalls carboxylgruppenhaltiges Polyvinylacetat oder Polymethylmethacrylat, einen oligomeren gesättigten Polyester oder ein Polyesterurethan, Polystyrol oder Polyethylen.

Die Formmassen können als Eindickmittel C 0,5 bis 10 Gew.-%, bezogen auf A, eines Oxids oder Hydroxids der Magnesiums oder Calciums enthalten. In den meisten Fällen sind die Formmassen aber ohne Eindickung handhabbar und verarbeitbar, so daß auf diesen Zusatz und die zeitaufwendige Eindickung verzichtet werden kann.

Die erfindungsgemäßen Formmassen enthalten auf 100 Gew.teile A 50 bis 250 Gew.teile Füllstoffe D, beispielsweise Kreide, Kaolin, Quarzmehl, Talkum, Aluminiumoxidhydrat, Dolomit oder Glimmer.

Die Formmassen enthalten ferner auf 100 Gew.teile A 40 bis 200 Gew.teile Glasfasern E, bevorzugt geschnittene Rovings mit einer Länge von 0,5 bis 5 cm.

Die Formmassen enthalten weiter 0,2 bis 5, vorzugsweise 1 bis 3 Gew.% eines Radikalinitiators F, dessen Halbwertzeit bei 90°C vorzugsweise größer als 50 h sein sollte. In Frage kommen tert.-Butylperbenzoat, Dicumylperoxid, 2,2-Bis(butylperoxy)butan, tert.-Butylperester.

Weitere mögliche Zusatzstoffe sind elastifizierende Polymere, Inhibitoren, Gleitmittel, Paraffinwachse, Beschleuniger, Flammschutzmittel, Formtrennmittel, Farbpigmente und Farbstoffe.

Zur Herstellung von flächigen SMC-Formmassen wird bei einer bevorzugten Ausführungsform auf eine Folie, z.B. aus Polyethylen oder Polyamid, eine 50 bis 100°C heiße Mischung aus Polyesterharz, Füllstoff, Radikalinitiator und ggf. weiteren Zusatzstoffen aufgerakelt, dann werden die Glasfasern aufgestreut und mit einer weiteren Folie, auf die eine ebensolche Mischung aufgerakelt ist, abgedeckt. SMC-Massen enthalten vorzugsweise 100 bis 200 Gew.teile Füllstoffe D und 80 bis 140 Gew.teile Glasfasern E, jeweils bezogen auf 100 Gew.teile A.

Die flächigen SMC-Formmassen werden durch Verformen in 140 bis 200°C heißen Pressen bei einem Druck von 100 bis 200 bar und bei einer Verweilzeit von 40 sec. bis 10 min verarbeitet und gehärtet.

Zur Herstellung von teigigen BMC-Formmassen werden alle Ausgangsmaterialien zusammen in Knetern oder auf Walzenmischaggregaten bei Temperaturen von 50 bis 100°C vermischt. Die Verarbeitung geschieht durch Einpressen der heißen Masse mit üblichen Duromer-Spritzgußanlagen in auf 140°C bis 200°C beheizte Werkzeuge, wo die Aushärtung stattfindet.

Die so hergestellten Formteile zeichnen sich durch eine Dauergebrauchstemperatur von über 100°C aus. SMC-Formmassen können zu Formteilen, z.B. Automobilfelgen oder Automobilinnenteilen, wie Schiebedachrahmen, verarbeitet werden; BMC-Formmassen zu Strukturbauteilen oder Automobilinnenteilen, wie Sonnendächer.

Die in den Beispielen genannten Teile und Produkte beziehen sich auf das Gewicht.

### Beispiel

### 9. Harzherstellung

2316 Gew.teile Maleinsäureanhydrid (23,6 Mol), 1561 g Dicyclopentadien (11,8 Mol) und 106 Gew.teile Wasser (5,9 Mol) wurden in ein Reaktionsgefäß eingewogen, das mit einem Thermometer, einem ständig arbeitenden Rührwerk und einer Vorrichtung zum Einleiten eines Stickstoffstromes ausgestattet war. Die Mischung wurde unter Rühren langsam auf eine Temperatur von 90°C erhitzt, wobei eine exotherme Reaktion eintritt. Nachdem die Temperatur wieder auf 105-110°C gefallen war, wurde eine zweite Wasserportion (106 Gew.teile) zugegeben. Die Mischung wurde auf 140°C erwärmt und 1 h bei dieser Temperatur gerührt. 0,125 Gew.teile Hydrochinon und 1238 Gew.teile Ethylenglykol (20 Mol) wurden zugegeben. Die Mischung wurde unter Rühren langsam auf 200°C erhitzt und so lange dabei gehalten, bis die Säurezahl 30 und die Schmelzviskosität (bei 125°C) 350 mPa·s betrug. Das Harz wurde auf 23°C abgekühlt. Während des Abkühlens wurden 0,125 Gew.teile Hydrochinon zugesetzt.

### 10. SMC-Herstellung

100 Gew.teile Harz (nach 1) wurden auf 80°C vorgeheizt und mit 150 Gew.teile Kreide, 4 Gew.teilen Calciumstearat und 2 Gew.teilen tert.-Butylperbenzoat vermischt. Die Masse wurde bei 80°C 100 Gew.teile Verstärkungsfasern aufgebracht und zu einer SMC-Masse verarbeitet.

## Patentansprüche

1. Flächige bzw. teigige Formmassen auf Basis von glasfaserverstärkten, füllstoffhaltigen ungesättigten Polyesterharzen (SMC-bzw. BMC-Massen), enthaltend
A. 100 Gew. teile eines ungesättigten Polyesters mit einer Viskosität η von 50 bis 800 [mPa·s] (bei 125°C),
B. 0 bis 50 Gew.teile eines thermoplastischen Polymeren,
C. 0 bis 10 Gew.teile eines Eindickmittels,
D. 50 bis 250 Gew.teile Füllstoffe,
E. 40 bis 200 Gew.teile Glasfasern,
F. 0,2 bis 4 Gew.teile eines Radikalinitiators,
dadurch gekennzeichnet, daß der Polyester A pro Molekül 0,1 bis 5,0 Endgruppen der allgemeinen Formel 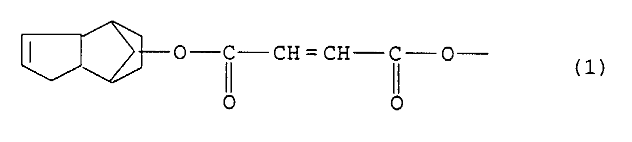 oder 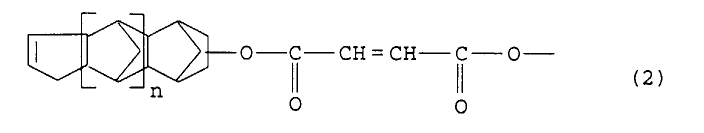 aufweist und weniger als 9 Gew.% copolymerisierbare Monomeren zugemischt enthält.

2. Formmassen nach Anspruch 1, d.g., daß der Polyester A weniger als 3 Gew.-%, vorzugsweise gar keine copolymerisierbare Monomeren enthält.

3. Formmassen nach Anspruch 1, d.g., daß sie kein Eindickmittel enthalten.

4. SMC-Masse nach Anspruch 1, d.g., daß sie
C. 100 bis 200 Gew.teile Füllstoffe und
D. 80 bis 140 Gew.teile Glasfasern enthält.

5. Verwendung der Formmassen nach Anspruch 1 zur Herstellung von Formteilen mit einer Dauergebrauchstemperatur von höher als 160°C durch Verpressen der SMC-Masse bei Temperaturen zwischen 150 und 200°C.

6. Verwendung der SMC-Masse nach Anspruch 4 zur Herstellung von Automobil-Felgen und Automobil-Innenteilen.

## Claims

1. Flat or doughy moulding compounds based on glass-fibre reinforced unsaturated polyester resins containing fillers (SMC or BMC compositions), containing
A. 100 parts by weight of an unsaturated polyester having a viscosity n of 50 to 800 [mPa.s] (at 125°C),
B. 0 to 50 parts by weight of a thermoplastic polymer,
C. 0 to 10 parts by weight of a thickener,
D. 50 to 250 parts by weight of fillers,
E. 40 to 200 parts by weight of glass fibres,
F. 0.2 to 4 parts by weight of a radical initiator,
characterised in that the polyester A has from 0.1 to 5.0 end groups corresponding to the general formula 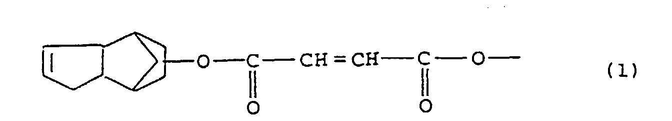 or 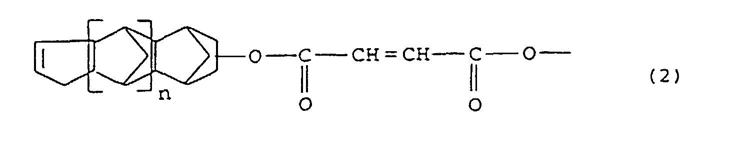 per molecule and contains less than 9 wt.% copolymerisable monomers mixed therein.

2. Moulding compounds according to claim 1, characterised in that the polyester A contains less than 3 wt.% copolymerisable monomers and preferably none at all.

3. Moulding compounds according to claim 1, characterised in that they contain no thickener.

4. SMC composition according to claim 1, characterised in that it contains
C. 100 to 200 parts by weight of fillers and
D. 80 to 140 parts by weight of glass fibres.

5. Use of the moulding compounds according to claim 1 for the production of moulded products having a long-term service temperature of higher than 160°C, by pressing the SMC composition at temperatures of between 150°C and 200°C.

6. Use of the SMC composition according to claim 4 for the production of wheel rims for automobiles and interiors of automobiles.

## Revendications

1. Compositions de moulage minces ou pâteuses (compositions SMC ou BMC), à base de résines de polyesters insaturées chargées, renforcées par des fibres de verre, contenant
A. 100 parties en poids d'un polyester insaturé avec une viscosité η de 50 à 800 mPa·s à 125°C,
B. 0 à 50 parties en poids d'un polymère thermoplastique,
C. 0 à 10 parties en poids d'un agent épaississant,
D. 50 à 250 parties en poids de charges,
E. 40 à 200 parties en poids de fibres de verre,
F. 0,2 à 4 parties en poids d'un initiateur radicalaire,
caractérisées en ce que le polyester A présente par molécule 0,1 à 5,0 groupes terminaux de formule générale 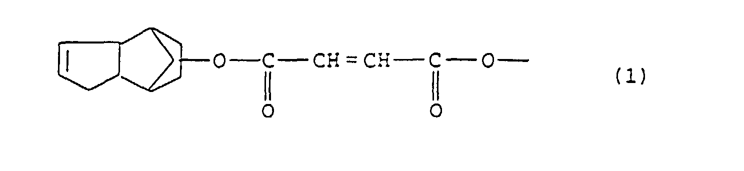 ou 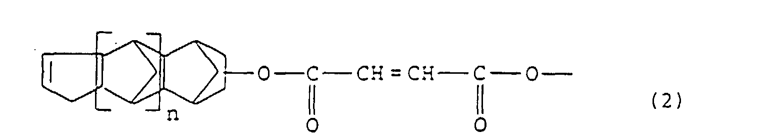 et contient en mélange dans la composition moins de 9% en poids de monomères copolymérisables.

2. Compositions selon la revendication 1, caractérisées en ce que le polyester A contient moins de 3% en poids, de préférence pas du tout de monomères copolymérisables.

3. Compositions selon la revendication 1, caractérisées en ce qu'elles ne contiennent pas d'agent épaississant.

4. Composition SMC selon la revendication 1, caractérisée en ce qu'elle contient
C. 100 à 200 parties en poids de charges et
D. 80 à 140 parties en poids de fibres de verre.

5. Utilisation des compositions de moulage selon la revendication 1 pour la préparation de pièces moulées avec une température d'utilisation prolongée de plus de 160°C par pressage de la composition SMC à des températures entre 150 et 200°C.

6. Utilisation de la composition de moulage SMC selon la revendication 4 pour la préparation de jantes d'automobile et de pièces intérieures d'automobile.
